# EUROPÄISCHE PATENTANMELDUNG

(11) **EP 4 173 938 A1**
(43) Veröffentlichungstag der Anmeldung: **03.05.2023**
(21) Anmeldenummer: 21204805.2
(22) Anmeldetag: 26.10.2021
(51) Int. Cl.: B62K 21/12, B62K 19/16, B62K 19/40, B62J 45/20, B62J 50/22

(54) **FAHRRADLENKER AUS KUNSTSTOFF**

(71) Anmelder: Trentmann GmbH & Co. KG, 49186 Bad Iburg (DE)
(72) Erfinder: Trentmann, Frank, 49196 BAD LAER (DE)
(74) Vertreter: Weeg, Thomas

(57) **Zusammenfassung**

Die vorliegende Erfindung bezieht sich auf einen Fahrradlenker (2) aus einem faserverstärkten Kunststoff mit einem Lenkerkern, der einen Mittelabschnitt (4) zur Verbindung mit einem Steuerkopf (8) und seitlich ausgerichteten, an gegenüberliegenden Seiten des Mittelabschnitts (4) ausgebildeten Lenkerarmen (6) aufweist.

Um einen Fahrradlenker vorzuschlagen, der zwar auch ein besseres Dämpfungsverhalten bei Vibrationen und Stößen bietet, gleichwohl aber die aus dem Stand der Technik bekannten Nachteile vermieden werden, wird vorgeschlagen, dass der Mittelabschnitt (4) und die Lenkerarme (6) als einteiliges Formteil (10) aus einem faserverstärkten Kunststoff hergestellt sind, der einen Faser-Volumenanteil von mindestens 50 % aufweist.

## Beschreibung

Die vorliegende Erfindung bezieht sich auf einen Fahrradlenker aus einem faserverstärkten Kunststoff mit einem Lenkerkern, der einen Mittelabschnitt zur Verbindung mit einem Steuerkopf und seitlich ausgerichteten, an gegenüberliegenden Seiten des Mittelabschnitts ausgebildeten Lenkerarmen aufweist.

Aus der Schrift EP 2 829 465 A1 ist ein gattungsgemäßer Fahrradlenker bekannt. Um Stöße nicht auf den Benutzer zu übertragen, die während der Fahrt über eine unebene Fahrbahn auf das Fahrrad einwirken, wird dort vorgeschlagen, den Fahrradlenker aus einem Kunststoff herzustellen, dessen Materialeigenschaften eine bessere Dämpfung von Stößen erlauben als die herkömmlichen aus Stahl hergestellten Lenker. Um den Fahrradlenker gleichwohl ausreichend stabil auszubilden, sind in seinem oberen Teil Versteifungseinsätze vorgesehen, durch die die Nachgiebigkeit des Fahrradlenkers wiederum eingeschränkt werden soll. Im Ergebnis soll also ein bewusst weiches Material verwendet werden, das Stöße und Vibrationen eliminieren soll, das aber wiederum so weich ist, dass es durch gesonderte Bauteile versteift werden muss, um überhaupt für den vorgesehenen Gebrauch tauglich zu sein. Im Ergebnis ist die durch das weichere Material notwendige Versteifung mittels zusätzlicher Bauteile aufwendig, und da die Versteifung nur in ihrer unmittelbaren Umgebung wirkt, ergibt sich mit dem offenbarten Fahrradlenker ein indifferentes Lenkgefühl.

Es ist die Aufgabe der vorliegenden Erfindung, einen Fahrradlenker vorzuschlagen, der zwar auch ein besseres Dämpfungsverhalten bei Vibrationen und Stößen bietet, gleichwohl aber die aus dem Stand der Technik bekannten Nachteile vermieden werden.

Die Aufgabe wird für einen gattungsgemäßen Fahrradlenker gelöst, indem der Mittelabschnitt und die Lenkerarme als einteiliges Formteil aus einem faserverstärkten Kunststoff hergestellt sind, der einen Faser-Volumenanteil von mindestens 50 % aufweist.

Der Mittelabschnitt des Fahrradlenkers beeinflusst das Fahrgefühl wesentlich, weil er einerseits die fahrbedingten Kräfte, die vom Vorderrad auf den Fahrradlenker einwirken, vom Steuerkopf aufnimmt und an die Lenkerenden überträgt, an denen der jeweilige Benutzer das Fahrrad hält und aus denen sich dessen aktuelles subjektives Lenkgefühl ergibt, und der Mittelabschnitt muss die Lenkbewegungen des Benutzers auf den Steuerkopf als Lenkimpulse an das Vorderrad übertragen, aus denen sich die Fahrtrichtung des Fahrrads ergibt. Hinzu kommt, dass die Lenkimpulse des Benutzers auch einen wesentlichen Einfluss haben auf das Gleichgewicht, in dem sich das Fahrrad in jeder Fahrsituation befinden muss. Der Benutzer benötigt die Rückmeldungen des Vorderrads über die darauf einwirkenden Kräfte, um auf dem Fahrrad das Gleichgewicht zu halten. Wird im Mittelabschnitt eines Fahrradlenkers ein weiches Material verwendet, dämpft dieses sowohl die Lenkimpulse des Benutzers als auch die Rückmeldungen aus dem Vorderrad an den Benutzer ab. Es ergibt sich ein rückmeldungsarmes indifferentes Fahrgefühl, das den Benutzer verunsichert und die Fahrsicherheit beeinträchtigt. Dieser Verlust an Signalübertragung kann nicht über lokale Versteifungen in den Lenkerarmen aufgefangen werden, wenn der Mittelabschnitt aus einem zu weichen Material hergestellt ist. Zwischen den Versteifungen und dem umgebenden Material können sich durch die unterschiedliche Belastbarkeit Relativbewegungen ergeben, die für sich bereits ein indifferentes Lenkgefühl bewirken. Die oberseitigen Versteifungen ändern auch nichts daran, dass gerade ein im Bereich des Steuerkopfes eingesetztes weicheres Kunststoffmaterial kein sicheres Lenkgefühl zu vermitteln vermag.

Ausgehend von dieser Erkenntnis lehrt die vorliegende Erfindung, einen Fahrradlenker aus Kunststoff herzustellen, bei dem der Mittelabschnitt und die Lenkerarme als einteiliges Formteil aus einem faserverstärkten Kunststoff hergestellt sind. Durch die Ausbildung als einteiliges Formteil werden Relativbewegungen zwischen mehreren Bauteilen im Bereich der Schnittstellen zwischen den Bauteilen vermieden. Das Dämpfungsverhalten des Fahrradlenkers hinsichtlich von Vibrationen und Stößen des Vorderrads ist homogen und gleichbleibend. Das einteilige Formteil wird von seiner Ausformung des Raumköpers her so gestaltet, dass es die auf die Lenkerarme einwirkenden Stützkräfte und Lenkimpulse des Benutzers gut auf den Steuerkopf überträgt. Durch die einteilige Ausführung werden auch Rückmeldungen des Vorderrads an den Benutzer über darauf einwirkende Kräfte nicht über Schnittstellen zwischen verschieden steif ausgelegten Bauteilen verwässert.

Wesentlich für die zufrieden stellende Funktion des aus einem Kunststoff hergestellten Fahrradlenkers ist neben der Einteiligkeit des Mittelabschnitts mit den Lenkerarmen auch, dass der verwendete Kunststoff eine ausreichende Festigkeit aufweist. Das ist der Fall, wenn dieser einen Faser-Volumenanteil von mindestens 50 % aufweist. Durch den hohen Faseranteil erhält der verwendete Kunststoff eine Festigkeit, die benötigt wird, um ein schwammiges Lenkgefühl zu vermeiden. Für die Festigkeit ist dabei weniger ausschlaggebend, welche Faserart verwendet ist. Bei den verwendeten Fasern kann es sich um Glas-, Karbon-, Aramid-, Kevlar- oder natürliche Fasern wie beispielsweise Flachs-, Ramie- oder Hanffasern handeln. Die Fasern können in Wirrlage, als Gewebe oder Gewirk in den Formkörper eingearbeitet sein. Sie können in Reinform in das Werkzeug zur Herstellung des Fahrradlenkers eingelegt sein, als vorgeformtes Prepreg, und/oder die Fasern sind in die Kunststoffmasse eingemischt, die in das Werkzeug zur Herstellung des Fahrradlenkers eingeleitet wird. Dabei können die Fasern auch in gleichen oder unterschiedlichen Längen verarbeitet sein. Als Kunststoff, in den die Fasern eingebettet sind, können insbesondere Thermoplaste und Duroplaste verwendet werden, die als Werkstoffe häufig über eine größere Härte verfügen als Weichplastik-Kunststoffe.

An den Mittelabschnitt können auch noch zusätzliche Bauteile angebaut sein, wie Abdeckungen, Zierelemente, aerodynamische Verkleidungen, Designteile und dergleichen. Wesentlich ist dabei, dass der Mittelabschnitt in die statische und dynamische Vermittlung der beim Fahrradfahren auftretenden Kräfte als tragendes Bauteil eingebunden ist. Mit dem aus einem faserverstärkten Kunststoff hergestellten Mittelabschnitt sind die tragenden Funktionen, die ein herkömmlicher metallischer Rohrlenker bisher ausgefüllt hat, funktional abgedeckt. Auf den Einsatz eines metallischen Rohres in einem Fahrradlenker kann deshalb ganz oder zumindest im Bereich des Mittelabschnitts verzichtet werden. Der Mittelabschnitt des Fahrradlenkers hat eine tragende Funktion, indem er die Stützlast des Fahrers aufnimmt und auf die Vorderradgabel überträgt.

Mit dem Begriff des Mittelabschnitts ist der mittlere Abschnitt des Fahrradlenkers gemeint, über den der Fahrradlenker mit dem Steuerkopf des Fahrrads verbunden ist.

Mit den Lenkerarmen sind die seitlichen Ausleger gemeint, die in seitlicher Richtung vom Mittelabschnitt abstehen. Dabei ist es nicht zwingend erforderlich, dass sich die einteilig mit dem Mittelabschnitt verbundenen Lenkerarme bis in den Griffbereich erstrecken. Es genügt, dass sich die einteilig mit dem Mittelabschnitt verbundenen Lenkerarme jeweils zumindest über etwa ein Drittel der Länge zwischen der Drehachse der Vorderradgabel und dem zugehörigen äußeren Ende des Fahrradlenkers erstrecken. Dieser Bereich ist wesentlich für ein stabiles Lenkgefühl des Fahrradlenkers. Über diese Länge hinaus kann der jeweilige Lenkerarm durch ein oder mehrere separate Anbauteile verlängert sein.

Der als einteiliges Formteil ausgebildete Mittelabschnitt mit den davon seitlich abstehenden Lenkerarmen kann als einstückiges Kunststoffspritzgussteil hergestellt werden. Über ein entsprechend gestaltetes Werkzeug können kostengünstig große Stückzahlen von Fahrradlenkern hergestellt werden.

Nach einer Ausgestaltung der Erfindung sind die Übergangsbereiche zwischen dem Mittelabschnitt und den seitlichen Lenkerarmen in einem kerbfreien bogenförmigen Verlauf ausgestaltet. Gerade im Übergangsbereich vom waagerechten Kraftfluss entlang der Erstreckungsrichtung der Lenkerarme in den nahezu senkrecht verlaufenden Kraftfluss entlang des Steuerkopfes, der fest mit dem Rahmen des Fahrrads verbunden ist, kann die Raumform des Formteils im Mittelabschnitt und den Lenkerarmen und deren inneres Design optimal an die dort auftretenden Kräfte und deren Kraftverlauf angepasst werden, ohne dass dabei irgendwelche Schnittstellen zwischen benachbarten separaten Bauteilen beachtet werden müssen. Die Übergänge zwischen den Lenkerarmen und dem Mittelabschnitt können in dem einstückigen Bauteil durch gerundete und in einem Bogen verlaufende Übergänge des Materials und entsprechende Materialstärken so gestaltet sein, dass dort Kerbkräfte vermieden werden. Es ergibt sich so ein optimaler Kraftfluss für die im Bauteil auftretenden Kräfte. Gleichwohl können hochfrequente Vibrationen und starke Stöße in dem einteiligen Formteil abgedämpft werden.

Nach einer Ausgestaltung der Erfindung weisen die Lenkerarme jeweils in zumindest einem Abschnitt einen in seinem Außenumfang unrund ausgestalteten Profilquerschnitt auf. Durch den unrunden Profilquerschnitt kann der Lenkerarm belastungsoptimiert ausgestaltet werden. Die unrunde Gestaltung des Profilquerschnitts findet sich dort, wo sie dazu genutzt werden kann, die Belastbarkeit des Fahrradlenkers in einer gebrauchsüblichen Belastungsrichtung zu erhöhen. So kann der Rohrquerschnitt beispielsweise oval ausgestaltet und das Oval mit seiner längeren Erstreckungslänge in vertikaler Richtung ausgerichtet sein, um den Fahrradlenker in der Richtung der Stützlast belastbarer zu machen. Auch andere spiegelsymmetrische oder nicht-spiegelsymmetrische Querschnittsformen kommen in Betracht.

Nach einer Ausgestaltung der Erfindung sind im unrunden Profilquerschnitt in Hauptbelastungsrichtung wirkende Versteifungsrippen ausgebildet, die dazwischen befindliche Hohlräume begrenzen. So können beispielsweise eine oder mehrere sich in vertikaler Richtung erstreckende Versteifungsrippen vorgesehen sein, um den Fahrradlenker besser gegen die Stützlast auszusteifen, mit der sich ein Benutzer auf dem Fahrradlenker abstützt.

Nach einer Ausgestaltung der Erfindung weisen die Lenkerarme jeweils abschnittweise einen teilweise oder vollständig umschlossenen Hohlraum mit über den Profilquerschnitt unterschiedlich dicken Wandstärken der Außenwände auf. Die Lenkerarme können in Bereichen, in denen sie stark belastet sind, massiv oder nahezu massiv ausgeführt werden, um dort eine ausreichende Stabilität zu erhalten. In anderen, insbesondere in weniger stark belasteten Bereichen, können aber auch Hohlräume im Inneren der Lenkerarme ausgebildet sein. Dort ist es durch die unterschiedlich dicken Wandstärken möglich, den Fahrradlenker von seiner Konstruktion und Bauweise her noch besser an die im täglichen Gebrauch auftretenden Lastkollektive anzupassen. Der Fahrradlenker kann dadurch leichter gehalten werden, und es wird nur so viel Material für die Herstellung eines Fahrradlenkers verbraucht, wie es für seinen Gebrauch und die dabei auftretenden Lastkollektive zwingend erforderlich ist. Über Finite-Elemente-Rechnungen und die daraus resultierenden Bauteiloptimierungen kann ein Fahrradlenker aus Kunststoff genau so ausgelegt werden, dass er die technischen Belastungsparameter genau einhält. Die im Fahrradlenker im Bereich der Lenkerarme ausgebildeten Hohlräume können dazu genutzt werden, darin elektrische und/oder mechanische Komponenten einzubauen. Bei den Komponenten kann es sich um Bowdenzüge, Kabel, Batterien, Bordrechner und dergleichen handeln.

Nach einer Ausgestaltung der Erfindung weisen die Lenkerarme an ihren äußeren Enden jeweils eine Aufnahmeöffnung zur Aufnahme einer Verlängerungsstange auf. Durch eine in die Aufnahmeöffnung eingeschobene und dort dauerhaft befestigte Verlängerungsstange wird die Breite des Fahrradlenkers vergrößert. Die Verlängerungsstange kann eine zylindrische Form aufweisen, so dass ihre kreisrunde Umfangsform dazu dienen kann, daran Anbauteile zu befestigen. Die Aufnahmeöffnung hat bevorzugt eine Hohlform, die zu der Umfangsform der Verlängerungsstange korrespondiert. Die Aufnahmeöffnung kann als ein Haltering ausgestaltet sein, der eine eingeschobene Verlängerungsstange um ihren ganzen Umfang herum umfasst. Die Aufnahmeöffnung hat eine Einstecklänge, die ausreicht, um die Lenkerarme für den üblichen Gebrauch ausreichend fest mit der Verlängerungsstange zu verbinden. Die Verlängerungsstange kann beispielsweise in ihrer Einbaulage festgeklebt werden, so dass sie unlösbar mit dem zugehörigen Lenkerarm verbunden ist. Es kann aber auch eine lösbare Verbindung vorgesehen sein, wie beispielsweise eine Schraubverbindung oder dergleichen. Es können unterschiedlich lange Verlängerungsstangen vorgehalten werden, die gleich tief in die Aufnahmeöffnung eingeführt werden können, um in einem Systembaukasten unterschiedlich breite Fahrradlenker anbieten zu können. Insbesondere können auf die Verlängerungsstange auch Handgriffe aufgesetzt werden. Bei einer runden Querschnittsform der Verlängerungsstangen können alle gängigen aus dem Zubehörhandel bekannten Handgriffe an den Fahrradlenker angebaut werden. Bei einer gegebenen Einstecklänge und einer ebenfalls gegebenen Länge für einen Handgriff ergeben sich zwischen dem Ende des Handgriffs auf der Innenseite des Fahrradlenkers und dem äußeren Ende des Lenkerarms ein zylindrischer Abschnitt, an den je nach dessen Breite ein oder mehrere Anbauteile angebaut werden können. Eine Verlängerungsstange kann abschnittweise oder durchgängig hohl oder massiv ausgebildet sein. Sie kann ebenfalls aus einem Kunststoff - gegebenenfalls faserverstärkt - oder aus einem metallischen Material hergestellt sein.

Nach einer Ausgestaltung der Erfindung weisen die Lenkerarme und/oder die Verlängerungsstangen abschnittweise jeweils einen in seinem Außenumfang kreisrunden Profilquerschnitt auf. Der in seinem Außenumfang kreisrunde Profilquerschnitt ist besonders für den Anbau von Anbauteilen geeignet. Es können Anbauteile verwendet werden, deren Verbindungsmittel darauf ausgelegt sind, an herkömmliche Fahrradlenker, die aus runden metallischen Rohren hergestellt sind, angebaut zu werden. Diese Anbauteile können dank der kreisrund ausgebildeten Profilquerschnitte unverändert auch an den erfindungsgemäßen Fahrradlenkern verbaut werden. Bei den Anbauteilen kann es sich beispielsweise um Handbremshebel, Schalthebel, Klingeln, Rückspiegel, Armaturen für die Federbein- oder Sitzhöhenverstellung, Displays, Scheinwerfer und dergleichen handeln.

Nach einer Ausgestaltung der Erfindung sind am Mittelabschnitt eine oder mehrere Verspannungsflächen für die Verbindung mit einem Steuerkopf ausgebildet. Da das Mittelabschnitt dazu dient, die Kräfte aus dem Vorderrad auf den Fahrradlenker und die Lenkkräfte und Stützlasten des Benutzers auf den Fahrradrahmen zu übertragen, ist der Mittelabschnitt das am stärksten belastete Bauteil des Lenkers. Um die einwirkenden Kräfte möglichst gut und sicher übertragen zu können, ist es vorteilhaft, am Mittelabschnitt Verspannungsflächen auszubilden, die eine dauerhaft feste und sichere Verbindung des Fahrradlenkers mit dem Steuerkopf ermöglichen. Vorteilhafterweise befindet sich die Verspannungsfläche auf der Unterseite des Mittelabschnitts. Die Verspannungsfläche kann plan ausgebildet sein, sie kann aber auch Erhebungen aufweisen, um eine bessere Verzahnung mit dem steuerkopfseitigen Koppelteil und der dort ausgebildeten Verspannungsfläche zu ermöglichen. Die Verspannung des Mittelabschnitts mit dem Koppelteil kann in axialer Richtung der Drehachse der Vorderradgabel erfolgen, beispielsweise durch eine Spannschraube, es ist aber auch möglich, eine Verspannung quer und versetzt zur Drehachse der Vorderradgabel zu schaffen, beispielsweise durch eine hohlzylindrische Verspannungsfläche, die auf einen Verbindungszylinder aufgesetzt wird, der seine Verspannungsfläche auf der zylindrischen Umfangsfläche vorhält.

Nach einer Ausgestaltung der Erfindung sind in dem einstückigen Formteil Anbau-und/oder Einbauräume für Funktionsbauteile ausgebildet. Durch entsprechende Anbau- und/oder Einbauräume kann die spätere Montage der Funktionsbauteile vereinfacht werden. Die Funktionsbauteile sind dabei bevorzugt witterungsgeschützt in den Fahrradlenker einbaubar, insbesondere deren elektrischen Anschlüsse, soweit vorhanden, dazu können gesonderte Abdeckungen und Deckel, transparent oder intransparent, vorgesehen sein, die ebenfalls bevorzugt maßgenau passend zu den Maßen der Anbau- und Einbauräume ausgebildet sind. Bei den Funktionsbauteilen kann es sich um elektrische und/oder elektronische Module handeln, die an einen Fahrradlenker angebaut werden, wie beispielsweise, aber nicht abschließend, Scheinwerfer, Tagfahrlichter, Bordcomputer, Bedien- oder Navigationsdisplays, elektrische oder elektronische Bedientasten oder mobile Telefone. Bei den Funktionsbauteilen kann es sich aber auch um Stecker, Kabelsätze, Bausteine zum Anschluss an ein lokales Busnetz wie beispielsweise ein CAN-Bus-Netz handeln, an die später die vorgenannten Funktionsbauteile oder weitere, auch fahrradseitig vorhandene elektronische Komponenten angeschlossen werden können. Die Anbau-und/oder Einbauräume können maßgenau passend ausgestaltet sein, um darin die jeweiligen Funktionsbauteile aufzunehmen. Für die spätere Montage der Funktionsbauteile können passgenaue Anschlüsse und Befestigungselemente wie Klemm-, Clips oder Rastverschlüsse bereits montagefertig in das einstückige Formteil eingeformt sein.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht von oben auf einen Fahrradlenker,
- Fig. 2:: eine Explosionszeichnung mit einer Ansicht von schräg oben auf die in dem in Fig. 1 gezeigten Fahrradlenker verbauten Komponenten, und
- Fig. 3:: eine Explosionszeichnung mit einer Ansicht von schräg unten auf die in dem in Fig. 1 gezeigten Fahrradlenker verbauten Komponenten.

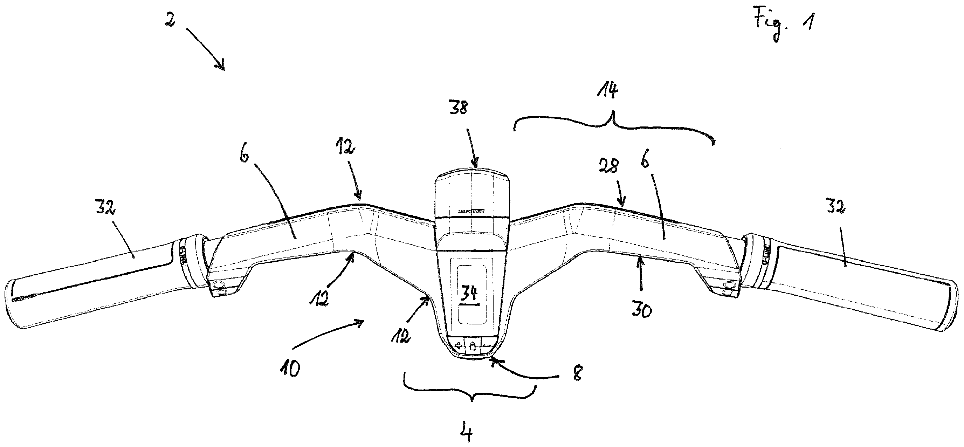

In Fig. 1 ist ein Fahrradlenker 2 aus einem faserverstärkten Kunststoff mit einem Lenkerkern gezeigt, der einen Mittelabschnitt 4 zur Verbindung mit einem Steuerkopf 8 und seitlich ausgerichteten, an gegenüberliegenden Seiten des Mittelabschnitts 4 ausgebildeten Lenkerarmen 6 aufweist. Der Mittelabschnitt 4 und die Lenkerarme 6 sind als einteiliges Formteil 10 aus einem faserverstärkten Kunststoff hergestellt. Der faserverstärkte Kunststoff weist einen Faser-Volumenanteil von mindestens 50 % auf.

In der in Fig. 1 gezeigten Ansicht ist gut erkennbar, dass die Übergangsbereiche 12 zwischen dem Mittelabschnitt 4 und den seitlichen Lenkerarmen 6 in einem kerbfreien bogenförmigen Verlauf ausgestaltet sind.

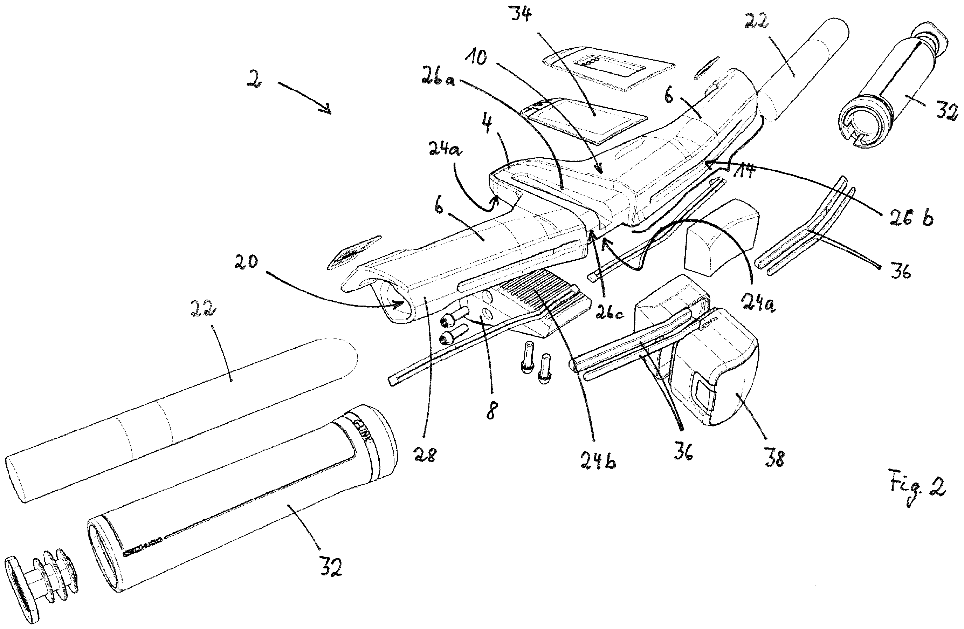

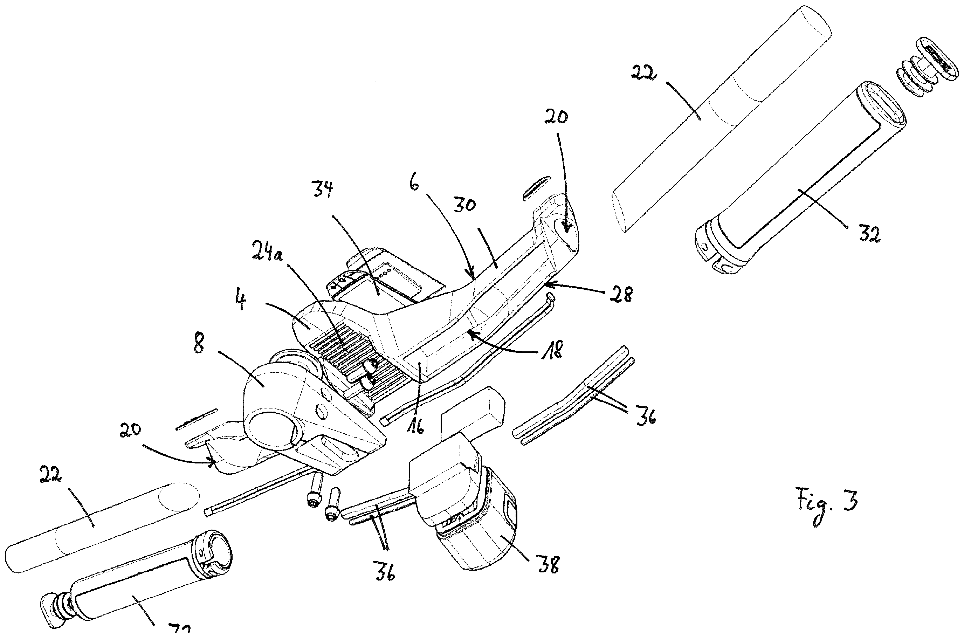

Die Lenkerarme 6 weisen jeweils in zumindest einem Abschnitt 14 einen in seinem Außenumfang unrund ausgestalteten Profilquerschnitt auf. Wie aus den Fig. 1 und 2 erkennbar ist, sind die nach oben weisenden Oberflächen und die in Fahrtrichtung weisenden Frontflächen der Lenkerarme 6 im Ausführungsbeispiel abgeflacht, aber immer noch leicht gewölbt und annähernd in einem rechten Winkel zueinander angeordnet, so dass sich im gezeigten Ausführungsbeispiel ein zumindest annähernd kastenförmiges Querschnittsprofil ergibt. Wie in der Fig. 3 zu erkennen ist, ist die Frontfläche 28 und die Rückwand 30 jeweils aus einer Fläche einer Versteifungsrippe 16 gebildet. Die beiden Versteifungsrippen 16 begrenzen zwischen sich jeweils einen nach unten offenen Hohlraum 18. Nach oben hin sind die Hohlräume 18 durch die Oberseite des Lenkerarms 6 geschlossen. Die Versteifungsrippen 16 können über ihre Länge hinweg und über den Profilquerschnitt der Lenkerarme 6 verteilt unterschiedlich dicke Wandstärken aufweisen.

In den Fig. 2 und 3 ist zu erkennen, dass die Lenkerarme 6 an ihren äußeren Enden jeweils eine Aufnahmeöffnung 20 zur Aufnahme einer Verlängerungsstange 22 aufweisen. Im gezeigten Ausführungsbeispiel weisen zumindest die Verlängerungsstangen 22 abschnittweise jeweils einen in seinem Außenumfang kreisrunden Profilquerschnitt auf. Auf die Verlängerungsstangen 22 werden im Ausführungsbeispiel die Handgriffe 32 aufgesetzt.

In den Fig. 2 und 3 ist zu erkennen, dass in dem einstückigen Formteil 10 Anbau-und/oder Einbauräume 26 für Funktionsbauteile ausgebildet sind. So kann beispielsweise in den Einbauraum 26a ein Display 34 eingesetzt werden. Zusätzlich ist in den

Fig. 2 und 3 noch eine Abdeckscheibe gezeigt, die den Einbauraum 26a nach ihrer Montage dichtend abdeckt. In die Einbauräume 26b können die Tagfahrlichter 36 eingesetzt werden, die aus LED-Lichtleisten gebildet sind. An den Anbauraum 26c kann der Scheinwerfer 38 angebaut werden.

Am Mittelabschnitt 4 ist eine Verspannungsfläche 24a für die Verbindung mit einem Steuerkopf 8 ausgebildet. Die am Mittelabschnitt 4 ausgebildete Verspannungsfläche 24a korrespondiert zu einer Verspannungsfläche 24b, die an dem Steuerkopf 8 ausgebildet ist, der mit dem zeichnerisch nicht dargestellten Gabelschaftrohr der Vorderradgabel verbunden ist. Beide Verspannungsflächen 24a, 24b sind gerippt ausgeführt, so dass sie nicht in Längsrichtung zueinander verschieblich sind, wenn sie aufeinanderliegen. In ihrer Einbaulage sind sie mit einer Spannschraube gegeneinander verspannt. Die Verspannungsflächen 24a, 24b sind so ausgebildet, dass die Verspannungsfläche 24a des Fahrradlenkers 2 nicht genau in Längsrichtung mittenzentriert auf der Verspannungsfläche 24b aufliegen muss, sondern auch um einige Rippen nach vorne oder hinten verlagert auf der Verspannungsfläche 24b aufliegen kann. Dadurch ist es möglich, den Fahrradlenker 2 um einige cm nach vorne oder hinten verlagert auf einem Fahrrad zu montieren.

Die Erfindung ist nicht auf das vorstehend beschriebene Ausführungsbeispiel beschränkt. Dem Fachmann bereitet es keine Schwierigkeiten, das Ausführungsbeispiel auf eine ihm geeignet erscheinende Weise abzuwandeln, um es an einen konkreten Anwendungsfall anzupassen.

### Bezugsziffernliste

- 2: Fahrradlenker
- 4: Mittelabschnitt
- 6: Lenkerarm
- 8: Steuerkopf
- 10: Formteil
- 12: Übergangsbereich
- 14: Abschnitt
- 16: Versteifungsrippe
- 18: Hohlraum
- 20: Aufnahmeöffnung
- 22: Verlängerungsstange
- 24: Verspannungsfläche
- 26: Anbau- und/oder Einbauraum
- 28: Frontfläche
- 30: Rückwand
- 32: Handgriff
- 34: Display
- 36: Tagfahrlicht
- 38: Scheinwerfer

## Patentansprüche

1. Fahrradlenker (2) aus einem faserverstärkten Kunststoff mit einem Lenkerkern, der einen Mittelabschnitt (4) zur Verbindung mit einem Steuerkopf (8) und seitlich ausgerichteten, an gegenüberliegenden Seiten des Mittelabschnitts (4) ausgebildeten Lenkerarmen (6) aufweist, **dadurch gekennzeichnet, dass** der Mittelabschnitt (4) und die Lenkerarme (6) als einteiliges Formteil (10) aus einem faserverstärkten Kunststoff hergestellt sind, der einen Faser-Volumenanteil von mindestens 50 % aufweist.

2. Fahrradlenker (2) nach Anspruch 1, **dadurch gekennzeichnet, dass** die Übergangsbereiche (12) zwischen dem Mittelabschnitt (4) und den seitlichen Lenkerarmen (6) in einem kerbfreien bogenförmigen Verlauf ausgestaltet sind.

3. Fahrradlenker (2) nach Anspruch 1 oder 2, **dadurch gekennzeichnet, dass** die Lenkerarme (6) jeweils in zumindest einem Abschnitt (14) einen in seinem Außenumfang unrund ausgestalteten Profilquerschnitt aufweisen.

4. Fahrradlenker (2) nach Anspruch 3, **dadurch gekennzeichnet, dass** im unrunden Profilquerschnitt in Hauptbelastungsrichtung wirkende Versteifungsrippen (16) ausgebildet sind, die dazwischen befindliche Hohlräume (18) begrenzen.

5. Fahrradlenker (2) nach einem der vorhergehenden Ansprüche, **dadurch gekennzeichnet, dass** die Lenkerarme (6) jeweils abschnittweise einen teilweise oder vollständig umschlossenen Hohlraum (18) mit über den Profilquerschnitt unterschiedlich dicken Wandstärken der Außenwände aufweisen.

6. Fahrradlenker (2) nach einem der vorhergehenden Ansprüche, **dadurch gekennzeichnet, dass** die Lenkerarme (6) an ihren äußeren Enden jeweils eine Aufnahmeöffnung (20) zur Aufnahme einer Verlängerungsstange (22) aufweisen.

7. Fahrradlenker (2) nach einem der vorhergehenden Ansprüche, **dadurch gekennzeichnet, dass** die Lenkerarme (6) und/oder die Verlängerungsstangen (22) abschnittweise jeweils einen in seinem Außenumfang kreisrunden Profilquerschnitt aufweisen.

8. Fahrradlenker (2) nach einem der vorhergehenden Ansprüche, **dadurch gekennzeichnet, dass** am Mittelabschnitt (4) eine oder mehrere Verspannungsflächen (24) für die Verbindung mit einem Steuerkopf (8) ausgebildet sind.

9. Fahrradlenker (2) nach einem der vorhergehenden Ansprüche, **dadurch gekennzeichnet, dass** in dem einstückigen Formteil (10) Anbau- und/oder Einbauräume (26) für Funktionsbauteile ausgebildet sind.
